# DEMANDE DE BREVET EUROPEEN

(11) **EP 0 619 470 A1**
(43) Date de publication de la demande: **12.10.1994**
(21) Numéro de dépôt: 94200790.7
(22) Date de dépôt: 25.03.1994
(51) Int. Cl.: G01C 15/00, G12B 5/00

(54) **Dispositif pour la projection à l'horizontale de rayons laser**

(30) Priorité: 07.04.1993 IT VI930050
(71) Demandeur: MICRO ITALIANA S.p.A., I-36071 Arzignano (Vicenza) (IT)
(72) Inventeur: Doriguzzi Bozzo, Mario, I-Milano (IT)
(74) Mandataire: Bettello, Luigi, Dott. Ing.

(57) **Abrégé**

Le dispositif comprend un projecteur (4) qui est monté sur la partie verticale (3) d'un équipage oscillant (2, 3) pourvu d'un contrepoids (5) qui par gravité assure le maintien permanent de l'horizontalité de la projection. Les oscillations de l'équipage sont amorties par un frein mécanique (6-7-8-9) à commande manuelle. L'embase (11) du carter (1) qui supporte l'équipage oscillant est montée à rotation sur un socle (10), une graduation permettant le repérage de l'angle de projection.

## Description

La présente invention a pour objet le dispositif pour la projection à l'horizontale de rayons laser qui est défini à la revendication 1.

En fait ce dispositif comprend un projecteur de rayons laser qui est monté sur la partie inférieure d'un équipage oscillant pourvu d'un contrepoids qui par gravité assure le maintien permanent de l'horizontalité de la projection.

Le dispositif comprend avantageusement une embase tournante grâce à laquelle on peut, par action manuelle ou motorisée, projeter le rayon laser dans des directions différentes qui sont toute disposées dans un plan rigoureusement maintenu à l'horizontale.

Il convient d'observer que par suite du maintien automatique de l'horizontalité de la projection, le dispositif est susceptible d'être posé sur un appui qui ne présente pas une horizontalité parfaite.

Le dessin annexé, donné à titre d'exemple, permettra de mieux comprendre l'invention, les caractéristiques qu'elle présente et les avantages qu'elle est susceptible de procurer :
Fig. 1 est une coupe verticale du dispositif de projection suivant l'invention, établi suivant une première forme de réalisation.
Fig. 2 est une vue en plan à plus grande échelle, montrant une partie de l'embase avec la graduation pour la mesure de l'angle de rotation.
Fig. 3 est une coupe partielle suivant un plan vertical perpendiculairement à celui de fig. 1.
Fig. 4 est une coupe verticale analogue à celle de fig. 1, mais correspondant à une autre forme de réalisation du dispositif suivant l'invention.
Fig. 5 est la vue en plan par dessus du dispositif suivant fig. 4.
Fig. 6 en est une coupe suivant un plan vertical orienté à 90° par rapport à celui de fig. 4.
Fig. 7 est une coupe horizontale illustrant le montage oscillant de l'équipage du dispositif de fig. 1, suivant le plan indiqué en VII-VII sur cette dernière.
Fig. 8 est une vue en élévation par l'avant montrant une autre forme de réalisation du dispositif suivant l'invention, suivant laquelle celui-ci est équipé d'un prisme propre à dédoubler le rayon laser.
Fig. 9 reproduit fig. 8, le rayon laser dédoublé étant dirigé non plus vers le haut, mais vers le bas.
Fig. 10 est la vue en plan du dispositif suivant fig. 8 et 9.
Fig. 11 est une coupe verticale suivant le plan indiqué en XI-XI en fig. 10.

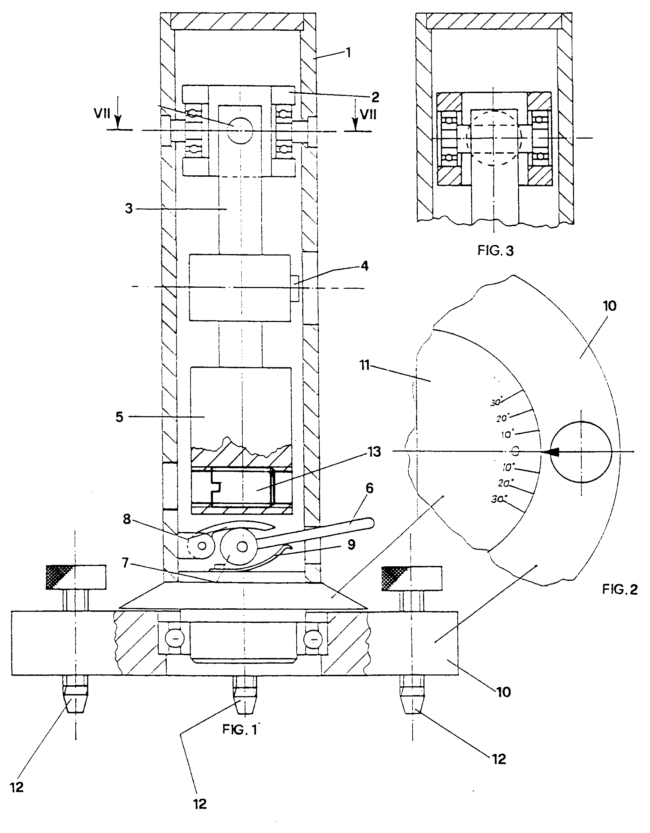

Dans la forme de réalisation illustrée en fig. 1, le dispositif comprend un carter 1 à l'intérieur duquel est monté un système d'articulations croisées 2, réalisé à la façon connue à l'aide de coussinets ou crapaudines et de pointes ou cônes. Ce système soutient la partie verticale oscillante 3 qui porte un émetteur de rayons laser 4, lequel est orienté perpendiculairement à l'axe du manchon 1 et est alimenté par une batterie ou autre source de courant. l'extrémité libre de cette partie 3 est munie d'un contrepoids 5.

Il convient d'observer ici qu'un résultat équivalent à ce qui a été représenté et décrit ci-dessus serait obtenu en plaçant l'émetteur verticalement sur le contrepoids 5 et en l'équipant d'un prisme propre à dévier à l'équerre le rayon émis afin de le diriger horizontalement.

La partie 3, le projecteur 4 et le contrepoids 5 forment un équipage pendulaire monobloc qui, par gravité et grâce au système d'articulations croisées 2, oscille librement avant de s'arrêter à une position parfaitement verticale par rapport au centre du système précité.

Pour garantir l'horizontalité parfaite du rayon laser en dépit d'irrégularités structurelles ou géométriques susceptibles d'affecter l'équipage oscillant (il peut notamment s'agir d'un manque d'homogénéité ou d'un défaut de symétrie dans les masses de l'équipage), on prévoit un dispositif de réglage, constitué par exemple par une vis 13 qui est logée dans le contrepoids 5 et dont le déplacement approprié, par vissage ou dévissage, influe par sa masse sur l'assiette de l'équipage précité, de manière à assurer l'obtention d'une position de cet équipage telle que le rayon laser soit projeté suivant une direction parfaitement horizontale.

On comprend que la vis 13 peut être remplacée par une pièce métallique freinée et/ou par des tares appropriées.

On comprend qu'avant d'affecter sa position exacte d'équilibre, le contrepoids 5 est animé d'un mouvement oscillant avant de s'arrêter, de sorte que pour obtenir l'immobilisation rapide de l'ensemble, on prévoit un moyen pour l'amortissement des oscillations pendulaires, ledit moyen pouvant être de type mécanique à commande manuelle, de type électrique, de type magnétique ou de type capacitif.

Dans l'exemple de réalisation qui a été illustré, le moyen mécanique consiste en un petit levier 6 à commande manuel le, propre à faire tourner une came 7 qui soulève un patin 8 pour l'amener au contact du contrepoids 5 qui est ainsi freiné. Un ressort 9 assure le rappel automatique du levier 6 et ainsi la libération du contrepoids 5 après chaque manoeuvre.

Le carter 1 comporte une embase 11 qui est montée à rotation sur un socle 10 de sorte qu'un simple déplacement angulaire opéré manuellement permet de projeter directement le rayon sur l'une quelconque des parois qui entourent le dispositif, tous les points de projection étant disposés suivant le même plan horizontal. L'embase 11 du carter est munie d'une graduation qui en combinaison avec un point de référence porté par le socle 10, permet la lecture de l'angle de projection, comme illustré en fig. 2. Le socle 10 est avantageusement muni de pieds 12, prévus réglables en hauteur de façon à permettre le réglage grossier de la verticalité du carter 1.

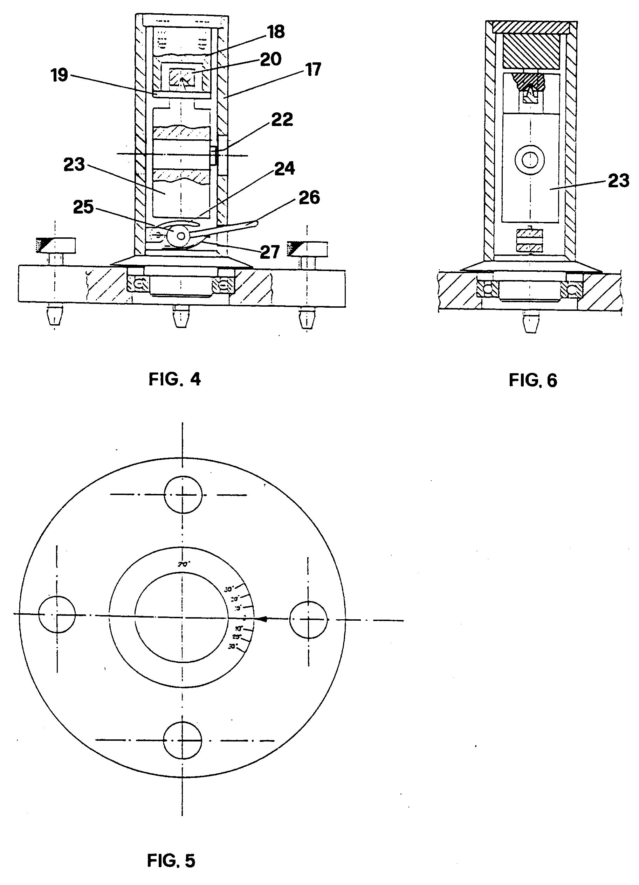

On a illustré en fig. 4 une seconde forme de réalisation de l'invention.

On trouve un carter 17 dont la partie supérieure est rigidement solidaire d'un bloc 18 équipé d'une traverse 19 à section triangulaire. Sur cette traverse 19 prend appui une barre 20 qui est creusée d'un siège propre à coopérer avec ladite traverse 19 ; la barre 20 est solidaire d'un contrepoids 23 et supporte l'émetteur de rayon laser 22, orienté perpendiculairement à l'axe vertical du contrepoids 23 précité.

Les oscillations de ce dernier peuvent être amorties à l'aide du patin 24 associé à une came 25 qui est commandée manuellement par un levier 26, un ressort de rappel 27 agissant sur ledit levier pour le ramener à la position relâchée, le tout comme on l'a décrit ci-dessus en référence à fig. 1.

On comprend que lorsque le levier 26 est complètement abaissé, par suite de son profil particulier la came 25 opère le soulèvement du poids 23 et l'application de la barre 20 contre le bloc 18, en immobilisant complètement l'équipage oscillant et en facilitant de la sorte le transport de l'ensemble du dispositif.

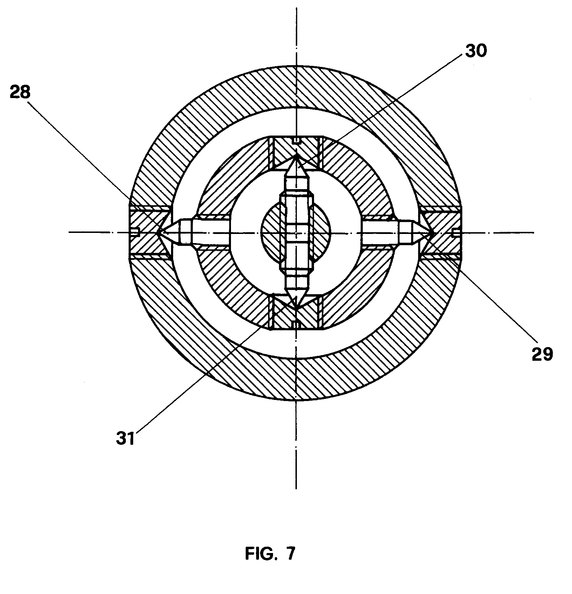

Le système oscillant à pointes et à sièges coniques peut être prévu sur des éléments réglables en position, comme on l'a montré en fig. 7 où les pointes 28 et 29 sont orientées perpendiculairement aux pointes 30 et 31.

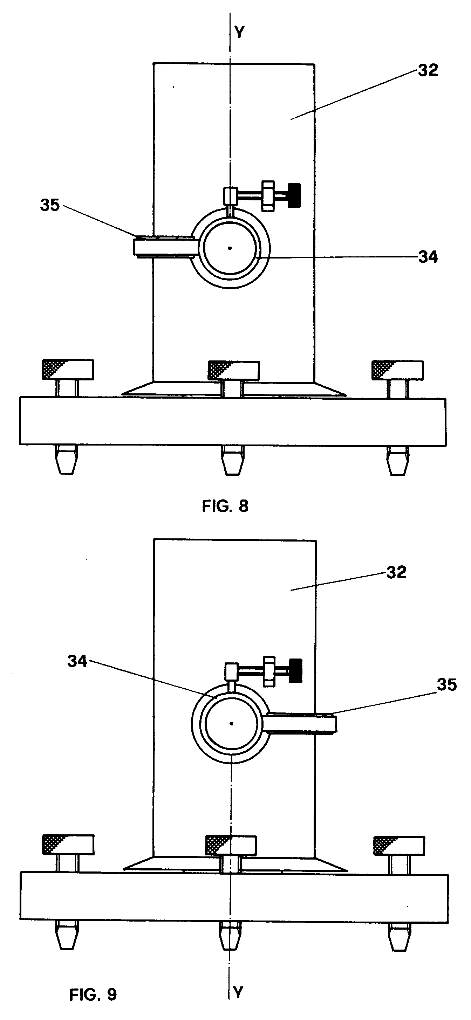

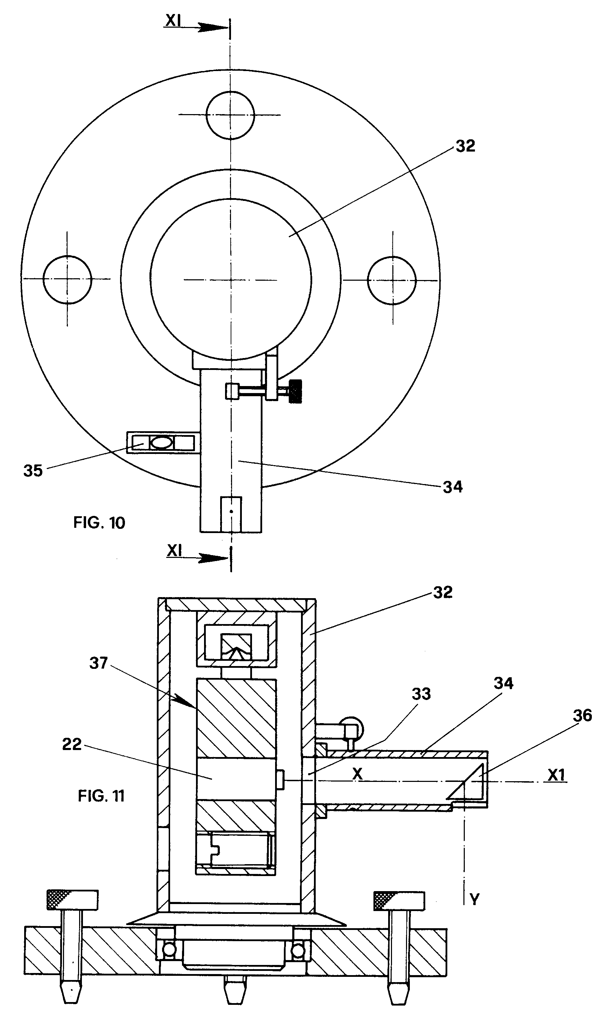

Dans la forme de réalisation qui a été illustrée en fig. 8 à 11, on a fixé sur le carter 32, dans l'axe de l'ouverture 33 destinée au passage du rayon laser, un manchon 34 équipé d'un prisme 36, de sorte que le rayon laser original X émis par l'émetteur monté sur l'équipage oscillant 37 est dédoublé (fig. 11) pour former deux rayons dont l'un, référencé X1, est orienté dans le prolongement du rayon original X tandis que l'autre Y est orienté perpendiculairement à celui-ci.

Le manchon 34 peut être orienté suivant son axe, soit à la main, soit en étant convenablement motorisé, ce déplacement orienté perpendiculairement à l'axe du carter 32 permettant de diriger le second rayon Y pour individualiser un plan perpendiculaire à l'axe du rayon X1.

Du fait qu'à la position de repos de l'équipage oscillant 37 le rayon X est orienté de manière parfaitement horizontale, il en résulte que le rayon Y dévié à 90° par le prisme est disposé en permanence dans un plan parfaitement vertical. De plus, afin qu'à la position d'équilibre de l'équipage oscillant 37 le rayon Y puisse individualiser une droite parfaitement verticale, il est prévu que le manchon tournant 34 qui porte le prisme 35 soit muni d'au moins un niveau à bulle 35 de haute précision, l'axe de ce niveau étant orienté à 90° par rapport au rayon Y sans toutefois coincider avec la direction du rayon X et ledit niveau étant en outre positionné de manière à être visible même après avoir tourné de 180°.

De cette façon, à la position d'équilibre de l'équipage oscillant 37 et de la bulle du niveau 35, le rayon Y obtenu par dédoublement à l'aide du prisme est orienté suivant une droite parfaitement verticale et, moyennant rotation du manchon 34, ce rayon Y peut être dirigé vers le haut ou vers le bas, en assurant l'individualisation de la droite verticale reliant par exemple deux points opposés au plafond et sur le sol.

En vue de faciliter et d'améliorer le positionnement du niveau à bulle à la position d'équilibre, on prévoit avantageusement pour la rotation du manchon 34 un réglage micrométrique à vis ou similaire.

## Revendications

1. Dispositif pour la projection à l'horizontale de rayons laser, caractérisé en ce qu'il comprend un projecteur (4, 22) qui est monté sur la partie verticale (3) d'un équipage oscillant (2-3, 37) pourvu d'un contrepoids (5, 23), lequel par gravité assure le maintien permanent de l'horizontalité de la projection.

2. Dispositif suivant la revendicaiton 1, caractérisé en ce que l'équipage oscillant (2-3, 37) est pourvu d'un moyen de réglage propre à garantir l'horizontalité parfaite de la projection dans le cas d'un manque d'homogénéité ou d'un défaut de symétrie dans les masses de l'équipage oscillant, lequel moyen est constitué par une vis (13) dont le déplacement approprié corrige, de par son poids, l'assiette de l'équipage précité une fois que ce dernier est arrivé en position de repos.

3. Dispositif suivant l'une quelconque des revendications 1 et 2, caractérisé en ce qu'il est doté d'un dispositif d'arrêt (8, 24) du type électrique, magnétique, capacitif ou mécanique, propre à amortir les oscillations pendulaires de l'équipage oscillant.

4. Dispositif suivant la revendication 3, caractérisé en ce que le dispositif d'arret comprend un patin (6, 26) qui est commandé manuellement par une came (7, 25) pour agir sur le contrepoids (5, 23) et freiner les mouvements d'oscillations de celui-ci, ledit patin étant en outre susceptible d'immobiliser l'équipage oscillant (2-3) en vue du transport du dispositif, tandis qu'un ressort (9, 27) ou autre moyen élastique est prévu pour libérer automatiquement le contrepoids après manoeuvre de la came précitée.

5. Dispositif suivant les revendications 1 à 4, caractérisé en ce que l'équipage oscillant (2-3, 37) est monté à l'intérieur d'un carter (1, 32) porté à rotation par un socle (10) pour permettre d'orienter la projection des rayons laser dans un même plan horizontal.

6. Dispositif suivant la revendication 5, caractérisé en ce qu'il est prévu une graduation qui permet la lecture de l'orientation de l'embase (11) du carter (1) par rapport au socle (10).

7. Dispositif suivant l'une quelconque des revendications qui précèdent, caractérisé en ce que son carter (32) est équipé d'un manchon (34) qui, orienté perpendiculairment audit carter, porte un prisme (36) agencé de façon à ce que le rayon laser original (X) engendré par l'émetteur (22) prévu sur l'équipage oscillant (37) est dédoublé par traversée dudit prisme pour former deux rayons perpendiculaires dont l'un (X1) est orienté dans le prolongement dudit rayon (X), lequel manchon porte-prisme (34) est susceptible d'être déplacé angulairement, à la main ou en étant motorisé, suivant son axe orthogonal à l'axe du carter (32) de façon à ce que le second rayon (Y) obtenu par dédoublement à l'aide du prisme, soit, à la position d'équilibre de l'équipage oscillant (37), toujours orienté dans un plan parfaitement vertical.

8. Dispositif suivant la revendication 5, caractérisé en ce que le manchon tournant (34) qui porte le prisme (36) est pourvu d'au moins un niveau à bulle (35) convenablement positionné à 90° par rapport à l'axe du second rayon (Y) sans toutefois que sa direction coïncide avec celle du rayon original (X), et tout en restant visible après rotation de 180°, de façon à ce qu'à la position d'équilibrede l'équipage (37) et de la bulle du niveau (35), ce rayon (Y) obtenu par dédoublement grâce au prisme soit disposé suivant une droite parfaitement verticale, en conférant ainsi la possibilité, moyennant rotation du manchon (34), de projeter le rayon verticalement aussi bien vers le haut que vers le bas et en garantissant la parfaite verticalité par suite du niveau (35) précité, la rotation dudit manchon étant à cet effet avantageusement opérée à l'aide d'un système micrométrique de réglage, par exemple du type à vis.
